# EUROPEAN PATENT SPECIFICATION

(11) **EP 2 380 096 B1**
(45) Date of publication and mention of the grant of the patent: **26.12.2018**
(21) Application number: 08875039.3
(22) Date of filing: 25.11.2008
(51) Int. Cl.: G06F 17/30, H04L 29/08, H04W 4/02

(54) **COMPUTER-IMPLEMENTED METHOD FOR PROVIDING LOCATION RELATED CONTENT TO A MOBILE DEVICE**
COMPUTERIMPLEMENTIERTES VERFAHREN ZUM BEREITSTELLEN VON ORTSBEZOGENEM INHALT FÜR EIN MOBILGERÄT
PROCÉDÉ INFORMATISÉ POUR COMMUNIQUER UN CONTENU GÉOGRAPHIQUE À UN DISPOSITIF MOBILE

(43) Date of publication of application: 26.10.2011
(73) Proprietor: Apple Inc., Cupertino CA 95014 (US)
(72) Inventor: MEIER, Peter, 80799 München (DE); KUHN, Michael, 80686 München (DE)
(74) Representative: Lang, Johannes
(86) International application number: PCT/EP2008/009983
(87) International publication number: WO 2010/060440

(56) References cited:
- WO-A1-2010/035079
- US-A1- 2005 255 861
- US-A1- 2006 206 624
- US-A1- 2007 233 864
- US-A1- 2008 052 151
- US-A1- 2008 052 413
- US-A1- 2008 270 530
- SAEID ASADI ET AL: "Calculation of Target Locations for Web Resources" WEB INFORMATION SYSTEMS - WISE 2006 LECTURE NOTES IN COMPUTER SCIENCE;;LNCS, SPRINGER, BERLIN, DE, vol. 4255, 1 January 2006 (2006-01-01), pages 277-288, XP019047526 ISBN: 978-3-540-48105-8
- BURIGAT ET AL: "Interactive visual analysis of geographic data on mobile devices based on dynamic queries" JOURNAL OF VISUAL LANGUAGES & COMPUTING, ACADEMIC PRESS LNKD- DOI:10.1016/J.JVLC.2007.04.001, vol. 19, no. 1, 14 January 2008 (2008-01-14), pages 99-122, XP022420221 ISSN: 1045-926X
- DIETER SCHMALSTIEG ET AL: "Experiences with Handheld Augmented Reality" MIXED AND AUGMENTED REALITY, 2007. ISMAR 2007. 6TH IEEE AND ACM INTERNATIONAL SYMPOSIUM ON, IEEE, PISCATAWAY, NJ, USA, 13 November 2007 (2007-11-13), pages 3-18, XP031269868 ISBN: 978-1-4244-1749-0
- PAPAGIANNAKIS G ET AL: "A survey of mobile and wireless technologies for augmented reality systems" COMPUTER ANIMATION AND VIRTUAL WORLDS, JOHN WILEY & SONS LTD, GB LNKD- DOI:10.1002/CAV.221, vol. 19, no. 1, 1 February 2008 (2008-02-01), pages 3-22, XP002569031 ISSN: 1546-4261
- HÖLLERER T ET AL: "CHAPTER 9: Mobile Augmented Reality; in: Telegeoinformatics: Location-Based Computing and Services" [Online] 31 January 2004 (2004-01-31), TELEGEOINFORMATICS: LOCATION-BASED COMPUTING AND SERVICES, H. KARIMI AND A. HAMMADS (EDS.), TAYLOR & FRANCIS BOOKS LTD, PAGE(S) 221 - 260 , XP007912968 Retrieved from the Internet: URL:http://graphics.cs.columbia.edu/public ations/hollerer-2004-tandf.pdf> [retrieved on 2010-05-06] the whole document

## Description

The present invention is directed to a computer-implemented method for providing content to a user of a mobile device based on a location where the mobile device currently resides. The invention is further concerned with a corresponding computer program product implementing such method.

A high amount of information is available on the Internet and often also on smaller networks. Users of computer devices accessing these networks may have access to rich content, like images, audio, video, animation, and other multimedia content. As the number of features available in mobile devices (e.g., mobile or cell phones, smartphones, personal digital assistants (PDAs), personal information managers, etc.) has increased, users now expect that much of this rich content will also be available from their mobile devices. They expect to have access on the road, in restaurants, at home and in the office through mobile devices, to information previously available only from a personal computer that was physically connected to an appropriately provisioned network. They want information from certain websites such as news, prices of goods, recipes when being in the supermarket for buying the correct goods or weather reports, and search results provided on their cell phones.

Mobile devices, which have access to the internet ("web") are becoming more common. Because input capabilities may be more limited in a mobile device (e.g., a mobile phone) than in a fixed computing device (e.g., a desktop computer), more effort may be required for a user to enter a search query (or other information) on the mobile device than would be required for the user in entering the same search query from the fixed computing device.

In addition, many mobile devices can rely on different methods to localize themselves. Also, location based services are being offered in a broad range. One problem of the state of the art is the generation of location specific information. Current approaches rely on explicit information generation by users or businesses by explicitly entering the respective web address (URL) or search query into the respective mobile device. Other approaches try to scan information, e.g. web pages, for location indicators, like address information. These sources provide some useful location specific information, but have some problems.

E.g. geotagging might quickly clutter the information space and bares the risk of a few geotaggers, strongly influencing the available information. Scanning existing information is mostly not very accurate and limited to certain information types. In either cases, the user is required to enter a search query or web address (URL) into the mobile device in order to get the desired location-related content presented on the mobile device, such as a set of search results or a desired web page.

US 2008/0052413 A1 discloses a method and system for providing location-based advertisements to requesting devices. When the advertisement system receives queries for advertisements, it identifies matching advertisements, ranks them based on a location and selects a format appropriate for the requesting device. The problems to be addressed are to display an (location) appropriate ad in an appropriate data format. As a result, an advertisement is delivered to a user after a query request is made by a user.

US 2008/0052151 A1 teaches how to select advertisement based on serving area or map area, i.e. in a certain distance to the user's location.

US 2006/0206624 A1 and US 2007/0233864 A1 teach the determination of a provider location and serving area associated with a web resource, i.e. an advertisement respectively in a certain distance to the user's location. US 2007/0233864 A1 specifically discloses a method that determines the location of a web resource from the addresses of users who access a web resource.

US 2008/0270530 A1 discloses to improve the ranking of positional information and to eliminate noise (i.e. unimportant information for the user) from the displayed results. The ranking is determined based on access logs to a displayed information, user evaluation or period of time spent on the information.

It is therefore an object of the present invention to provide a computer-implemented method which facilitates the process for the user of a mobile device to get content presented on his or her mobile device.

The invention is directed to a computer-implemented method according to the features of claim 1. Further, the invention is directed to a computer-implemented method according to the features of claim 4. Moreover, the invention is concerned with a computer program product applicable to perform such methods.

In a first aspect of the invention, a computer-implemented method comprises a data collection process with regard to search queries and a data display process which particularly serves to provide content, such as at least one result or a result set provided from a search engine, to the user of a mobile device.

Particularly, in the data collection process at least one first search query is received from a first mobile device including receiving a first location indicator indicative of a location of the first mobile device. The location can include an uncertainty value, containing the uncertainty of the measurement. The time and date of the recording may also be stored in the database. The first search query and the first location indicator are transmitted to at least one database, the database adapted for storing a plurality of search queries received from a plurality of mobile devices. The first search query and assigned location-related information containing or derived from the first location indicator are stored in the database. Preferably, in this way a plurality of search queries received from a plurality of mobile devices is stored with respective assigned location-related information in the database.

In a data display process the method comprises the steps of receiving a second location indicator indicative of a location of a second mobile device, transmitting a request to the database and associating the second location indicator with location-related information stored in the database, and transmitting at least one second search query having assigned location-related information corresponding to the second location indicator from the database to the second mobile device and proactively presenting the at least one second search query on or at the second mobile device without the user of the second mobile device being proactive. The second search query is transmitted to a search engine and at least one result or a result set received from the search engine is presented on or at the second mobile device.

In a second aspect of the invention, a computer-implemented method comprises a data collection process with regard to web addresses and a data display process which particularly serves to provide content, such as presenting a web page corresponding to a web address, to the user of a mobile device.

Particularly, in a data collection process at least one first web address from a first mobile device and a first location indicator indicative of a location of the first mobile device are received, it may contain uncertainty information, wherein the first web address and the first location indicator are transmitted to at least one database, the database adapted for storing a plurality of web addresses received from a plurality of mobile devices, and the first web address and assigned location-related information containing or derived from the first location indicator are stored in the database. Preferably, in this way a plurality of web addresses received from a plurality of mobile devices is stored with respective assigned location-related information in the database.

In a data display process the method comprises the steps of receiving a second location indicator indicative of a location of a second mobile device (location indicator might include an uncertainty), transmitting a request to the database and associating the second location indicator with location-related information stored in the database, and transmitting at least one second web address having assigned location-related information corresponding to the second location indicator from the database to the second mobile device and proactively presenting the at least one second web address on or at the second mobile device without the user being proactive. The second web address is transmitted to a provider and a web page corresponding to the web address is presented on or at the second mobile device. The web page may be identified using its URL. Also, the system may leave out for filtering parts of the URL, like Protocol, 3^{rd} level domain, 2^{nd} level domain, top level domain, path or file of the web address when having a plurality of web pages.

The invention proposes a completely new way of generating location specific information, which is generated by the mobile device users' collaboration, without the users explicitly creating tags or knowingly influencing the information space and without error prone algorithms, which scan information. Background of the invention is the thought that if a certain type of information is of interest at a certain location, people will frequently use their mobile device at that location to gather this information, e.g. by entering a search query or reading a certain website or listening to certain audio instructions or watching a certain movie or getting any other kind of information. According to the invention, this information flow is monitored (favourably anonymously) in the data collection process by storing the respective information in the at least one database, wherein peaks of certain information usage may be calculated therefrom. These peaks can then be offered to other users of mobile devices in a respective data display process for easily accessing interesting information depending on the location of the respective mobile device on which the data are to be displayed.

The invention comprises two interweaved processes, particularly the data collection process and the data display process, as described above. While the user of a first mobile device is accessing information, the system involving the at least one database gathers hints about where and which information is requested by the user of the first mobile device. This data can then be used in a data display process for a user of a second mobile device, which may be a different mobile device than the first mobile device, to actively propose information or search queries to the user of the second mobile device. This can, for example, be helpful on the shopfloor, for maintenance personnel, who frequently need to look up a service manual about an airplanes-front wheel at the front-wheel and it can be helpful for tourists who want to access information about an antique temple.

Embodiments of the invention and advantageous features thereof are further disclosed in the dependent claims.

The invention and embodiments thereof will now be explained in more detail with reference to the drawings, in which
- Fig. 1: shows a schematic diagram of an exemplary system configuration implementing an embodiment of the invention,
- Fig. 2: shows an embodiment of a data collection process according to an embodiment of the invention,
- Fig. 3: shows an embodiment of a data display process according to an embodiment of the invention,
- Fig. 4: shows an example of a display on a mobile device according to an embodiment of the invention,
- Fig. 5: shows another example of a display on a mobile device according to an embodiment of the invention,
- Fig. 6: shows an example outcome of the mean shift algorithm, which may be used for clustering,
- Fig. 7: shows an example formula to calculate the center of a cluster and the uncertainty of the center's position,
- Fig. 8: shows an example formula to calculate the relevance of a location data point according to an embodiment of the invention.

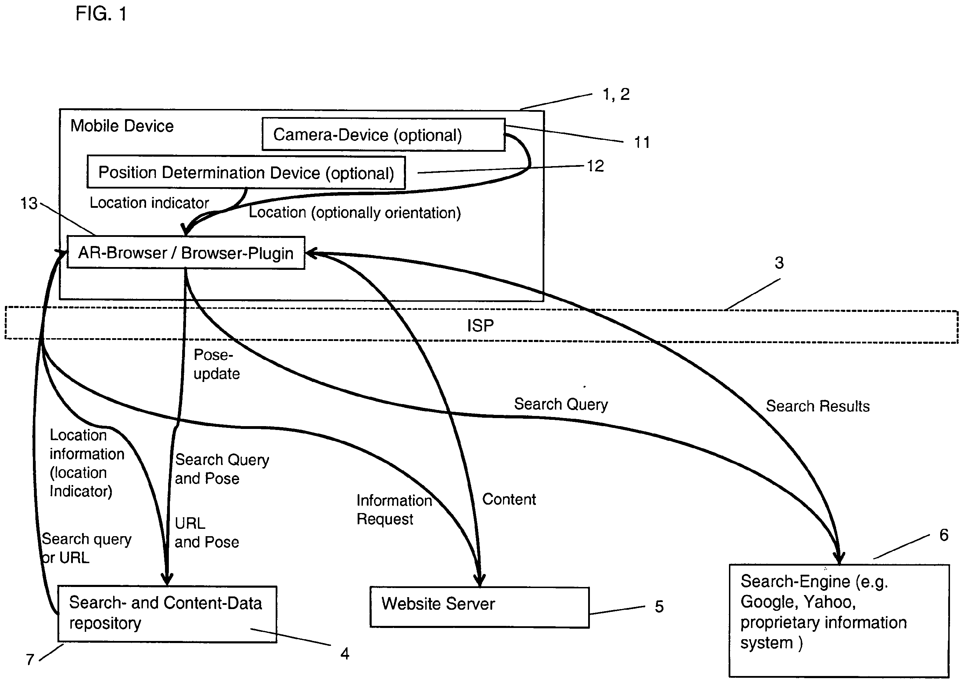

Fig. 1 shows a schematic diagram of an exemplary system configuration implementing an embodiment of the invention. In the present case, the system comprises two mobile devices, one of which involved in a data collection process and the other one involved in a data display process according to the invention. The mobile devices may be identically in their configuration, although this is not necessary. The invention may be applied, in principal, with any kind of mobile device which is capable of providing and receiving the information and data as described herein. Further, the invention may be applied with any number of mobile devices. In the present example, in order to explain the principles of the invention, the mobile device 1 used by a first user is involved in the data collection process, whereas the mobile device 2 is involved in the data display process and may be used by a different user. The mobile devices 1, 2 may be any kind of mobile devices. In the present case the mobile devices are cell or mobile phones as commonly available.

The mobile devices 1, 2 are each equipped with a position determination device 12 generating location information being or derived from a location indicator which may be any type of data or information usable for indicating an absolute or relative position of the mobile device. A software component 13 is further implemented for displaying information on a display screen of the mobile device. The location information can be just a position, but can also include orientation information (pose). The position is generated in relation to a coordinate system. This can be for example an earth fixed, earth centered coordinate system, but any other type of coordinate system may also be used. For example, a coordinate system in relation to another device, such as an airplane or a car, may be used.

The mobile devices each are capable of accessing a provider, such as an internet service provider (ISP) 3 (in other embodiments, the provider can also be a simple server with WLAN connectivity) in order to access a database 4 implemented in accordance with the principles of the invention, and a website server 5 and/or a search engine 6, such as the commonly known Google or Yahoo search engine or any other proprietary or open information system implementing a search engine. In general, the term search engine shall specify any type of machine which is capable of searching for information stored in one or more databases (or information storage places) upon receiving a search phrase from a user and providing search results in a corresponding result set.

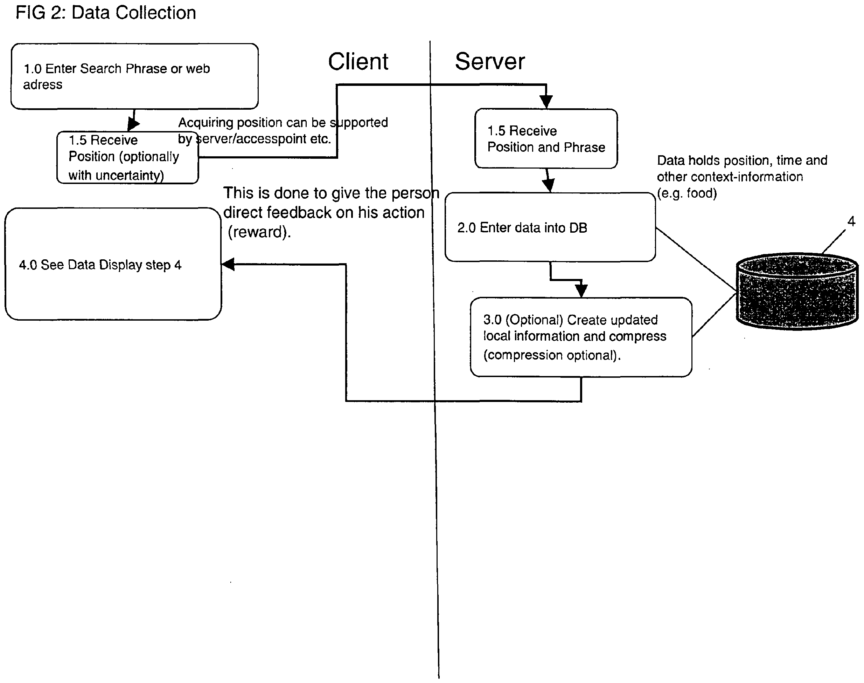

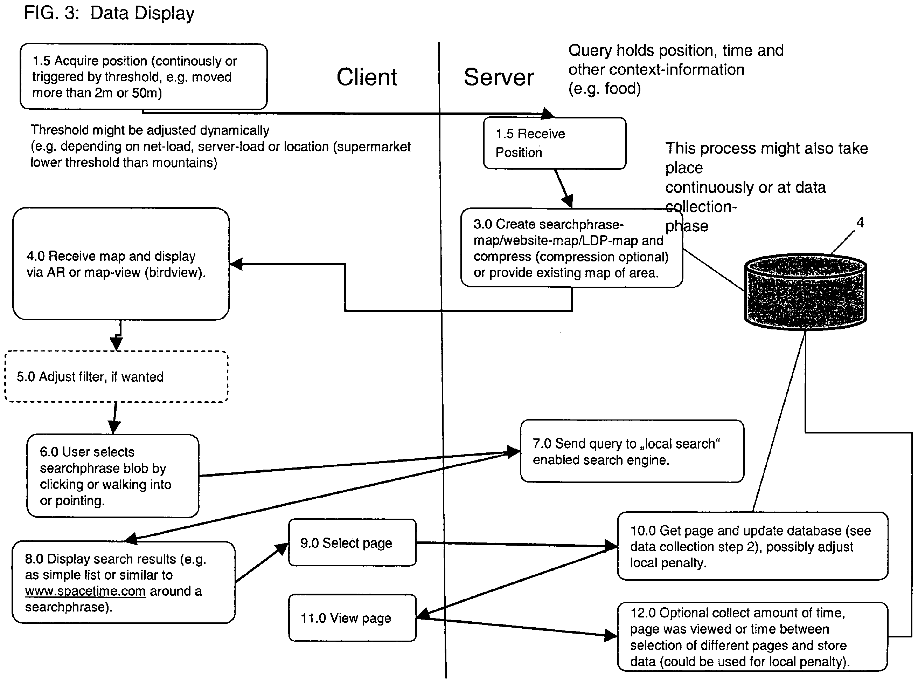

The invention basically consists of two processes, namely a data collection process and a data display process. Generally, while the user is accessing information using the mobile device 1, the system gathers hints about where and which information is requested (cf. Fig. 2). This data is then used to actively propose information or search queries to the user of a mobile device 2 (cf. Fig. 3).

It will be appreciated by persons skilled in the art that almost any part of the system can be either run on the server or on the client, including a smart caching mechanism between a server and a client. In the present exemplary implementation of the system as shown in Figures 1 to 3, the components are interacting with each other as follows:

The mobile device 1, 2 is at least sometimes connected to at least one server 7. The connection can be provided by an Internet Service Provider 3. The server 7 holds a search- and content-data repository 4 (implemented in a database (DB) structure or something similar) to store data from at least one mobile device 1. Also, a server 5 holds content, e.g. websites or documents as commonly available through the internet. In one implementation of the system, a search-engine 6 is provided which accepts search queries and provides search results which refer to accessible content. The components 4, 5, 6 and 7 are in the present case each remote from the mobile devices 1, 2. The search- and content-data repository 4, the website server 5 and/or the search engine 6 may, of course, also be implemented as or in a single system.

The use of a search engine 6 which provides search results pointing to prior indexed contents is known in the art. As part of the invention, the search- and content-data repository 4 is added and receives any search-queries and content-requests in combination with location data including or derived from the location indicator which may be provided by the position determination device 12 of the mobile device. This happens while the user is using his mobile device 1 or 2, the way he is used to it.

As an example, the user of mobile device 1 enters a first search query into the mobile device 1 in order to gain appropriate data from the search engine 6. In the data collection process this search query is received from the mobile device 1, and further a first location indicator indicative of a location of the mobile device 1 is received by an output device of the mobile device 1, the location indicator being indicative of an absolute or relative position of the mobile device. The first search query and the first location indicator are transmitted to the database implementing the search- and content-data repository 4. Basically, this process is implemented for any mobile device of a plurality of mobile devices in which a search query is entered and which accesses the server 7, so that the search- and content-data repository 4 is for storing a plurality of search queries received from a plurality of mobile devices. The first search query and assigned location-related information containing or derived from the first location indicator is stored in the search- and content-data repository 4.

This process is also shown with reference to Fig. 2 which shows a data collection process as explained above. Client in the left column of Fig. 2 designates an application which may run on the mobile device 1, whereas the right column designates steps of the process which may run on one or multiple servers such as server 7 of Fig. 1.

Collecting this data, a service as part of the invention can be executed on client or server side to automatically create points of interest at locations (Location information), where specific search-queries are entered or specific content is requested. As part of the invention, location information is preferentially created where specific search-queries are entered above-average compared to other search queries or content. As part of the invention, the points of interest are presented on a component such as a display on the mobile device in relation to their location. One possible implementation is to display graphical elements on a map, similar to an application known as Google maps. Another possible implementation is to provide an augmented reality user interface 13 with graphical elements floating at the location of interest. The augmented reality interface could use a semitransparent display, which allows to see the real world and the information at the same time. The augmented reality interface could also use a camera 11 to record the real world and mix the camera image with the location information. The augmented reality interface could also use a projector to project location information on nearby surfaces.

The position determination device 12 can for example be a global-positioning-system. Also, the camera-device could be used to extract the position and/or orientation of the mobile device and to generate therefrom an appropriate location indicator. Also, the position of the mobile device could be conceived from other information, like the network cell the user is currently using or location hints inside a search-query itself. The location-data containing or derived from such location indicator can in some cases be sent from a server to the mobile device.

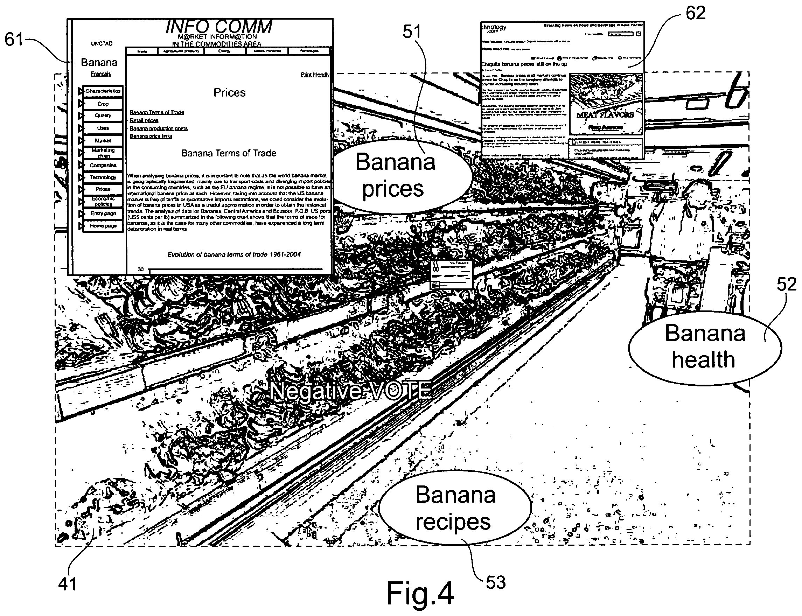

An embodiment of a possible generation of location data is now explained in more detail according to Figure 3 and Figure 4.

According to step 1.0, the user enters a search phrase or web address, if no data he is interested in, is already displayed at his location (if data was already present, he could act according to step 6 in Fig. 3).

According to step 1.5, next, location data is retrieved. There are many possibilities to retrieve location data, e.g. by a sensor integrated into the mobile device or attached to the local device (e.g. GPS) or by sensors mounted in the environment watching the mobile device (e.g. motion tracking systems) or optical tracking systems using an integrated camera of the mobile device or attached to the mobile device. Also location data can be just latitude and longitude or latitude, longitude and altitude or x,y,z coordinates. It can also include 6 degrees of freedom with the position and orientation of the device. The orientation could be one, two or three dimensional. The orientation could be retrieved from different kind of sensor or optical tracking algorithms as well, known in the state of the art. The location could also be retrieved from the position of the mobile device in a network. Location data can also come from the combination of sensor data and also from the combination with mathematical models, like motion models. Many possibilities are known in the state of the art. The location (and orientation) can also include an uncertainty value, which is also known by the state of the art. The location data (optionally with uncertainty) including the search phrase or web address and optionally other information, like the user's age or a description of the user, if provided, are send to the server. In case of data collection, location data can be retrieved for each request or, if the user is using the display and a recent location data value is present, a recent value could be reused. In case of data display, the location data could be continuously sent to the server, whenever retrieved from the tracking system used to provide location data, or the position update could be sent after moving a certain amount of distance or if the client is moving out of the coverage of the map, he has already received from the server. Many possibilities can be realised.

According to step 2.0, the data is then entered into a database to be used by step 3. The data can just be added or for example a database query could be performed, looking for similar records and increasing a hit count, as described above. The data can include all kinds of information, like the search query or web address, the location, the uncertainty, the orientation, the current time, user information, cookies, the ip, device-ids and many other information, common to search engines and information system, known to the state of the art. The additional information might for example be used for identifying search sessions or filtering information according to users wishes. Also, the system may choose to ignore queries, which seem to be coming from robots or scripts.

Step 3.0 is used similarly in Fig. 2 and Fig. 3. In general these steps can be performed upon a users request or when new data is entered or when the server's CPU has capacity to maintain the map. There also may be several maps created and prepared and a selection is made from the pre recorded maps, for example based on the user's location.

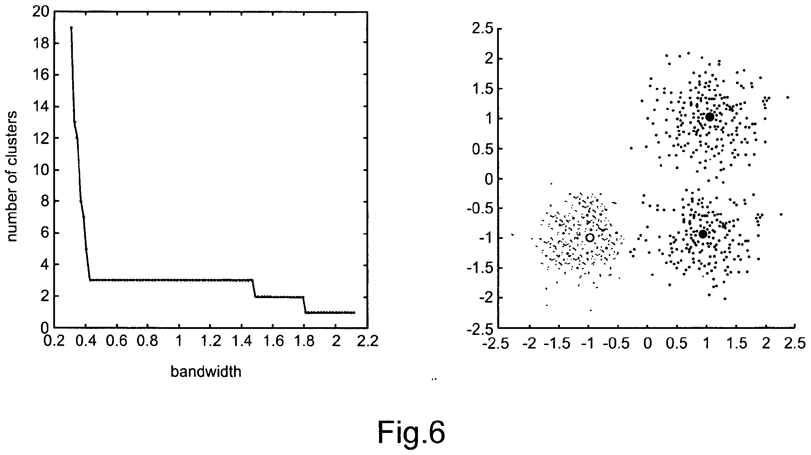

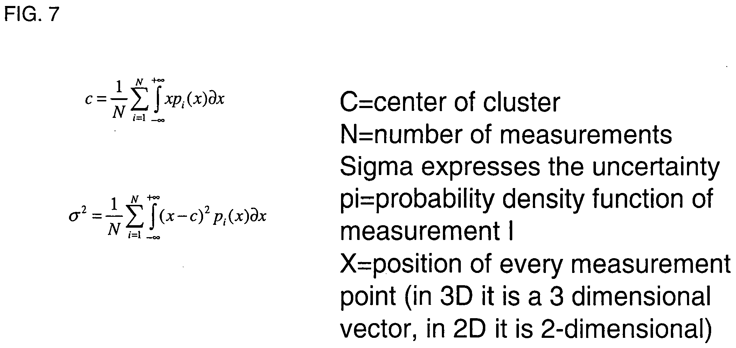

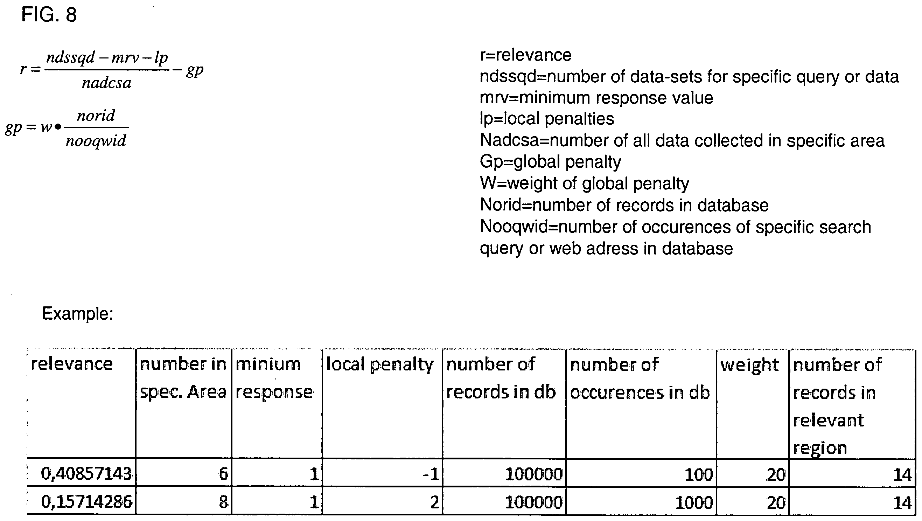

The following steps describe exemplary embodiments of creating a map.
3.1 From the mass of collected data, the system selects data, which was recorded in a certain range around the mobile-devices' current position. This can be done by algorithms and data structures known in the art, for example kd-tree, r-tree or just filtering latitude and longitude (and optionally altitude) values. The range can be configured by the user or an administrator or be calculated depending on the minimum amount of records a user wants to take into account, whereas the minimum number can also be configured by a user or an administrator. Also, not only a range, but also a specific area (or in 3D a volume or a 3d object) could be used. E.g., a user could configure to only use information collected "in the building I am currently in". Information about these areas can be stored inside the database or might be retrieved from any other location based information system. The user's configuration can be taken into account during map creation or later, during the viewing process. During the selection of data, not only the location, but additional information, like session data, recorded, can be taken into account. For example, only the last search query of a search session might be taken into account or duplicate queries of the same device may be ignored.
3.2 Next, the search queries can be put into a neutral language format, in case the language has different expressions for the same query or the language allows flectional expressions. It may also be possible to use keyword tables to translate synonyms into one common word (e.g. "mobile pc" and "portable pc"). Also, as stated above, web addresses can also be simplified and adjusted to hold a more general format, e.g. by cutting of the protocol or cutting out the top level domain or combinations.
3.3 Now, different algorithms are possible to create location data. The easiest approach is to create one location data point for each search query or each document-request. A location data point is representative of the search query or document-request (web address), particularly indicates where to place or display the search query or document-request in or on a display area.
3.4 Instead of step 3.3, more sophisticated algorithms can be used, for example clustering, which allow the aggregation of more than one (if more than one exist) record of a specific search query or website into one or more aggregates, which we will also call location data points (LDP).
   A: Remove all measurements with an uncertainty of more than a configured value (e.g. 20 meters) from the set (if uncertainty data is present).
   B: Run the mean shift algorithm (see Comaniciu, D. and Meer, P: Mean Shift: A Robust Approach Toward Feature Space Analysis. IEEE Transactions on Pattern Analysis and Machine Intelligence, Vol. 24. No. 5, May 2002), with, over the radius from 1 evenly distributed start-points to find the number of senseful clusters. The bandwith could be selected according to 3.1 in Comaniciu and Meer, e.g. by running the algorithm multiple times, with varying bandwith and selecting the bandwith with the largest operating range at which the number of clusters stays constant (an example output for this is given in Figure 6, designating 0,9 to be a good bandwith. In Figure 6, the bold points in the center area of an array of points represent a respective center of a cluster displayed in an exemplary coordinate system, which center of cluster may be taken as a LDP, as described in the following under step 3.5).
   C: Now the process could be stopped or move directly to D), but it could also be refined by running the algorithm proposed in Chau, M.;Cheng, R.; Kao, B. And Ng, Jackey: Uncertain Data Mining: An Example in Clustering Location Data. Uncertain Data Mining: An Example in Clustering Location Data. In Lecture Notes in Computer Science, Advances in Knowledge Discovery and Data Mining Volume 3918/2006, pp 199-204: Springer Berlin / Heidelberg 2006. This time the removed measurements from A are also considered, where each measurement, can be taken into account with an individual uncertainty. The number of clusters established in B can be used. In another implementation of the invention, step A and B are left out and the process can start with step C, where a mixture of Chau et al. And Pelleg, D. And Moore, A.: "X-means: Extending k-means with efficient estimation of the number of clusters." is used.
   D: Now, optionally, the uncertainty of the resulting clusters can be calculated, e.g. by the formula in figure 7. In case a center is not returned by the algorithm used before, the center can be calculated as in the given formula (figure 7).
3.5 After step 3.3 or 3.4, we have location data points (LDP) with a count-value indicating how many data-sets were responsible for the creation of the data point. With this information, the importance of a data point at that location can be calculated. A possible formula is (number of data-sets for specific query or data - minimum response value - local penalties) / number of all data collected in specific area) * global penalty. Whereas the minimum response value can be a value configured by the user or an administrator or can be derived from the total number of location data points in the specific area. For example, if very few datapoints are in the area, the minimum response value might become zero. Whereas local penalties can be positive or negative values, which depend on user interaction, judging, if the LDP fits the location and whereas the penalty can be turned off and on by a user or by an administrator. Whereas the number of all data collected in a specific area can be the sum of records from step 1 or, alternatively, a number of total search queries or webpages retrieved, around the current position or the center of the blob (kind of speech bubble), with a different radius, which can be configured by the user or an administrator. In general the number of all data collected in a specific area, has the purpose to take into account locations, like waiting areas, where people use the internet or an information system more frequently. Whereas global penalty can be derived from the percentage of the specific query or data being stored in all datasets recorded and be used to avoid a height weight for data or queries, which are very common and location independent, like 'www.google.com' or urls starting with 'www.google.com'. The global penalty could be derived from pages like www.alexa.com, which evaluate the overall traffic to a website or from the database or databases used in this system, itself (see formula figure 8). A graphical representation of the formulas can be found in Figure 8. The local penalty can be created from all kinds of data. E.g., if a website or search query element, is only activated shortly and then deactivated, this indicates, that the piece of information seems interesting by name, but isn't. On the other hand, if a user opens a webpage for a longer time, this might vote in favour of that website. Also, the viewer could have an option to actively vote on information offers and these votes (negative or positive) are taken into account, when calculating the local penalty. The local penalty could be stored as an independent record in the database holding location, search-phrase or webpage and optionally uncertainty and be included into the clustering mechanism, being handled as search-phrase or webpage records and being counted in step 3.5. Or the local penalty could be applied to all records related to an LDP as an additional information variable. To make this step clearer, figure 8 holds an example table with two example LDPs. The first LDP, e.g. the search term "banana"(including searchterms like "bananas") was searched for 6 times. The other (e.g. the website www.metaio.de) was watched 8 times. Since only these two records exist in that area, the total number of records in that area is 14. The system has a minimum response of 1, therefore all records, of which no more than 1 occasions are findable or clusters with less than 2 records would lead to a 0 or negative relevance. But there are more values. Two users who have seen the search term "banana"at that location and find that senseful, have voted in favour of that LDP (e.g. by interacting with that LDP in an AR-view and attaching a heart symbol) and the local penalty was decreased. The website metaio (www.metaio.de or www.metaio.com or www.metaio.com/examples/index.html) was not found senseful by one user and was watched by another user, but only for a very short time (e.g. 2 seconds). The user then for example clicked the "back to search button"to view other possibilities. Therefore the local penalty for metaio is 2. The values (e.g. 6-1+1) are divided by 14. From these values, "banana" is a bit more relevant than metaio. Another value is now added. It is the global penalty and helps to filter out websites or search terms which are very frequently used, anyways, and can therefore probably be found everywhere. In this case this is also not in favour of metaio, which makes up 1% of all records in the database (4). Therefore, with a weight of 20 for the global penalty, the relevance of metaio is decreased by 0,2.Before sending any data from the client to the server or vice versa, the data may be compressed or encrypted or both.
4. Now, in step 4 depending on the importance or weight, the system (on the server- or on the client-side) can display the LDPs in different qualities (size, color, form, etc.) or decide to not display the LDP at all (e.g. if the relevance value is below a certain value, e.g. 0,2). The LDPs can be displayed in different ways, as described in other parts of this document.

The way of displaying the LDP can also depend on the uncertainty (from 3.4D) of the cluster or the current accuracy of the location, available about the mobile device, displaying data. If the information about the cluster is very uncertain or the location of the mobile device is very inaccurate or uncertain, the LDPs might be displayed, differently, e.g. as a 2d-list on the side of the browser.

The way of displaying the LDP can also depend on the type of LDP (query or data request).

In case of query-LDPs, a set of search results (e.g. the first results from a prioritised list) can proactively be displayed next to the query-LDP. In one implementation of the invention, the server database can also store the amount of webpages, which where opened, belonging to a certain search query in a certain location or area. This information can then be used to prioritise the search results (or also influence the local penalties in step 5.). Also, if a website was selected often enough to create its own LDP, it might not be shown, as a result in the search list.

In case of data-LDPs, a preview of the data (e.g. snapshots of a movie or an image of a website) can be displayed in an icon-like manner.

Optionally, additional LDPs can be displayed (for example advertisement), which fits a certain type of search query or a certain data request. These LDPs can be fed from any kind of database or storage of location related data.

In case location data points (LDPs) have the same or a very close center to each other, an intelligent algorithm, known from the state of art, can rearrange their positions. For example, if two LDPs intersect, the LDPs are moved apart on the axis connecting the two LDP centers, away from each other, so that they do not intersect, anymore.
5. The way of displaying may also depend on user options (step 5). E.g. the user could configure something like "show only the 5 most relevant ones". The system would then select the LDPs with the 5 highest scores and display them. The user may also choose to filter the display according to other values, like time of day the data was recorded or weekday. Or the user may select to only display data from a certain group of people, who chose to provide this data in their profile (like age or member of a certain group). In case clustering algorithms are used to provide the data, for example a certain percentage of the records in that cluster must then comply to that filter. In case the map in step 3 is created on user request, the step 3.1 could also immediately filter the data.
6. In step 6, the user can select a search phrase LDP or directly select an icon of a web address. If a web address is selected, we move to step 10 in figure 3, immediately, leaving out steps 7, 8 and 9. The LDP selection can be done in many kinds of ways known in the state of art concerning text, 2D interfaces or 3D interfaces. In case the user selects an LDP of a search query, the query is sent to a search engine (step 7) and the result list is displayed, which can also be done in many different ways (step 8). As a possible embodiment of the invention, steps 7 and 8 can also be performed, without the user selecting a search phrase LDP. The system could proactively retrieve search results for all visible search query LDPs and display them in some way, for example in 3D as an icon next to the LDP with lines connecting the LDP and the icon.
9. In step 9, when a web address was selected, it is retrieved and the server 7 can be informed about this and stores this information in the database 4.
10. In step 10, after retrieving the page, it can be viewed in many different ways, from a standard webbrowser view, replacing the search screen, to a 3D panel with the information on top, many things are possible. To end the viewing, the user may close the browser view, or close the 3D panel in an AR-overlay, by interacting with it.
11. Optionally, when the page is closed or not viewed anymore (e.g. by turning away from it in an AR view) the time the page was viewed, might also be sent to the server and influence the local penalty (increase value for short viewing times or decrease value for long viewing times).

It should be noted that recordings may be deleted from the search- and content-data repository, after existing for a specified time (e.g. one month or one year). The specified time may also depend on the number of all data collected in specific area. If the number of all data collected in specific area is very small, the specified time may be longer.

All the above steps can be calculated frequently on the client side, as soon as the user has moved a certain distance (figure 3 step 1) or can be calculated on the server side. Also, it is not necessary to calculate LDPs on every user request. Also, it is possible to create a map of LDPs, e.g. overnight, and send a datastructure containing these LDPs to interested clients. These clients may then calculate what to display, according to individual settings.

In the following, an exemplary method and several embodiments thereof according to the invention will be described with particular reference to Figures 1 to 5.

For the following description of an exemplary data display process, it is assumed that the search- and content-data repository 4 holds a plurality of search queries received from a plurality of mobile devices operated by a respective amount of users.

A second location indicator indicative of a location of a mobile device 2, which may be the same as mobile device 1 or may be a different mobile device, is received by the server 7. Further, a request based on the second location indicator is transmitted to the server 7 and search- and content-data repository 4. With the server 7, the second location indicator is associated with location-related information stored in the search- and content-data repository 4 with respect to the above mentioned multiple search queries received from multiple mobile devices.

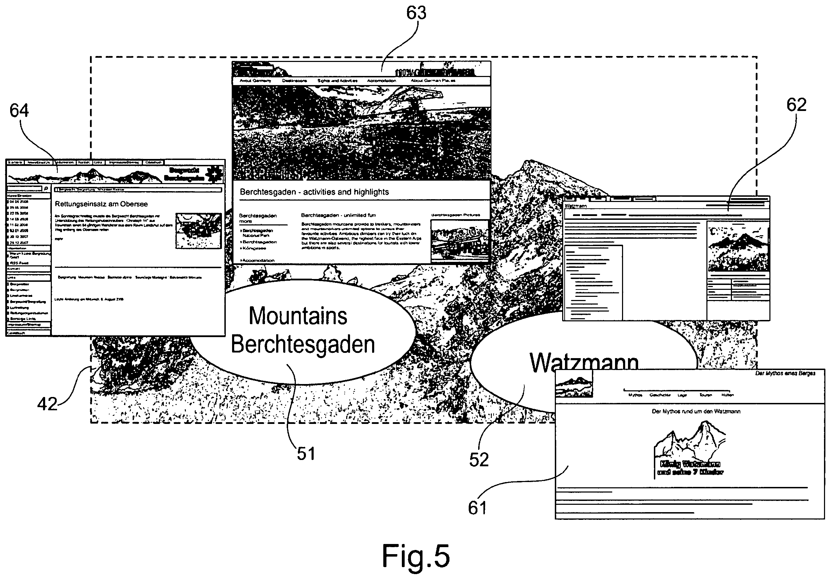

Thereafter, at least one second search query having assigned location-related information corresponding to the second location indicator is transmitted from the search- and content-data repository 4 to the mobile device 2. The at least one second search query is proactively presented on or at the mobile device 2 without the user of the mobile device 2 being proactive, such as shown in Figures 4 and 5 as an example.

In the present case of Figures 4 and 5, there are proactively presented multiple search queries 51 to 53 on or at the mobile device 2 in a graphical presentation on a display such that each of the search queries 51 to 53 is displayed in a highlighted area on the display separated from any other displayed search query. Here, the highlighted area is generated automatically upon receipt of the respective search query from the search- and content-data repository 4.

In the present example of Figures 4 and 5, at least one user has previously entered into his mobile device 1 search queries 51 to 53 so that these search queries have been stored in the search- and content-data repository 4 together with assigned location-related information of the mobile device at the time of entering the respective search query. Assigning location-related information of the mobile device to a respective search query means that at the particular location where the search query is entered by the user into the mobile device 1 the location indicator is retrieved and location-related information derived therefrom is associated with the search query just entered.

As shown in Figures 4 and 5, at least one of the search queries 51 to 53 or each of the multiple second search queries 51 to 53 are displayed in a respective separated bubble area, which may be generated proactively by the server 7. The user may select at least one of the search queries 51 to 53, in this embodiment by clicking or pressing the respective bubble area on the display, or by any other user's instructions appropriate for selecting the respective query. In this way, the user is not required to enter the search query into the mobile device and is also presented with ideas of appropriate search queries as a result of the previous user behaviour. The selected one of the search queries 51 to 53 is transmitted to the search engine 6 and a result set received from the search engine 6 is presented on or at the mobile device 2.

The data display process is also shown with reference to Fig. 3 which shows a data display process as explained above. Client in the left column of Fig. 3 designates an application which may run on the mobile device 2, whereas the right column designates steps of the process which may run on one or multiple servers such as server 7 of Fig. 1.

The above data collection and data display processes have been described with reference to search queries. However, these processes may also be applied analogously with respect to web addresses, such as Internet web addresses as commonly known as URLs, and the display of the appropriate web sites, such as shown with reference to Figures 4 and 5.

As an example, the user of mobile device 1 enters a first web address (URL) into the mobile device 1 in order to gain appropriate data from the website server 5. In the data collection process this web address is received from the mobile device 1, and further a first location indicator indicative of a location of the mobile device 1 is received by an output device of the mobile device 1, the location indicator being indicative of an absolute or relative position of the mobile device. The first web address and the first location indicator are transmitted to the database implementing the search- and content-data repository 4. Basically, this process is implemented for any mobile device of a plurality of mobile devices in which a web address is entered and which accesses the server 7, so that the search- and content-data repository 4 is for storing a plurality of web addresses received from a plurality of mobile devices. The first web address and assigned location-related information containing or derived from the first location indicator is stored in the search- and content-data repository 4.

For the following description of an exemplary data display process, it is assumed that the search- and content-data repository 4 holds a plurality of web addresses (URLs) received from a plurality of mobile devices operated by a respective amount of users.

A second location indicator indicative of a current location of a mobile device 2, which may be the same as mobile device 1 or may be a different mobile device, is received by the server 7. Further, a request based on the second location indicator is transmitted to the server 7 and search- and content-data repository 4. With the server 7, the second location indicator is associated with location-related information stored in the search- and content-data repository 4 with respect to the above mentioned multiple URLs previously received from multiple mobile devices.

Thereafter, at least one second web address (URL) having assigned location-related information corresponding to the second location indicator is transmitted from the search-and content-data repository 4 to the mobile device 2. The at least one second URL is proactively presented on or at the mobile device 2 without the user of the mobile device 2 being proactive.

The user may select at least one of the presented web addresses, in this embodiment by clicking or pressing the respective bubble area on the display, or by any other user's instructions appropriate for selecting the respective URL. In this way, the user is not required to enter the URL into the mobile device and is also presented with ideas of appropriate URLs as a result of the previous user behaviour. The selected one of the web addresses is transmitted via the ISP 3 to the website server 5 and the web page corresponding to the selected web address is received from the website server 5 and presented on or at the mobile device 2.

In the present case of Figures 4 and 5, there are proactively presented multiple web pages 61 to 64 on or at the mobile device 2 in a graphical presentation on a display such that each of the web pages 61 to 64 is displayed in a highlighted area on the display separated from any other displayed web page. Here, the highlighted area is generated automatically upon receipt of the respective web page from the website server 5.

In the present example of Figures 4 and 5, at least one user has previously entered into his mobile device 1 web addresses corresponding to web pages 61 to 64 so that these web addresses have been stored in the search- and content-data repository 4 together with assigned location-related information of the mobile device at the time of entering the respective web address. Assigning location-related information of the mobile device to a respective web address means that at the particular location where the web address is entered by the user into the mobile device 1 the location indicator is retrieved and location-related information derived therefrom is associated with the web address just entered.

As shown in Figures 4 and 5, at least one of the web addresses and/or web pages 61 to 64 or each of the multiple web addresses and/or web pages 61 to 64 are displayed in a respective separated area, which may be generated proactively by the server 7.

Generally, the invention may be applied in combination with the following further aspects.

A plurality of search queries or a plurality of web addresses, respectively, may be stored in the search- and content-data repository 4. In this regard, there is transmitted at least a first number of the plurality of search queries or web addresses stored in the search- and content-data repository 4 having assigned location-related information corresponding to the second location indicator of the mobile device 2 from the server 7 to the second mobile device 2. At least a second number of the plurality of search queries or web addresses is presented on or at the second mobile device 2, which second number is different from the first number. Thus, an appropriate filter may be implemented in the search- and content-data repository 4 for determining the first number of search queries or web addresses and in the mobile device 2 for determining the second number of search queries or web addresses when receiving the search queries or web addresses, respectively.

Particularly, the first number of the plurality of search queries or web addresses may be determined by filtering a number of search queries or web addresses out of the plurality of search queries or web addresses, respectively.

For example, filtering a number of search queries or web addresses out of the plurality of search queries or web addresses, respectively, may include applying at least one of the following filtering information stored in the search- and content-data repository 4 and associating the filtering information with corresponding information received from the second mobile device 2 or acquired automatically: user account specific information, time of day and/or user account data. Filtering a number of search queries or web addresses out of the plurality of search queries or web addresses, respectively, may include evaluating a hit count stored in the search- and content-data repository 4 and which is associated with each of the plurality of search queries or web addresses. In this regard, the hit count indicates a number of previous accesses to the respective search query or web address. This approach is particulary senseful for low resolution positional information. Further methods of filtering information can be derived from the algorithms described above.

The second number of the plurality of search queries or web addresses presented on or at the second mobile device 2 may include displaying the search queries or web addresses in graphical association with displayed map information or a photographical view taken by the second mobile device 2, such as shown in Figures 4 and 5. Particularly, augmented reality technology may be applied when displaying the search queries or web addresses together with the photographical view. For an augmented reality view, the distance, up to which objects shall be shown, can be configurable.

As shown in figures 4 and 5, search queries or web addresses are displayed on or at the mobile device 2 by displaying the respective search query or web address in speech-bubble-like manner (as shown with search queries 51 to 53 and web pages 61 to 64) in graphical association with displayed map information or a photographical view taken by the mobile device 2.

In this example, the user selects at least one of the search queries or web addresses by selecting the respective speech bubble containing the search query or web address to be selected, particularly by clicking into the speech bubble, or by moving the mobile device 2 to the location point where the speech bubble is displayed in the photographical view or map view, or by pointing onto the speech bubble. Information could be displayed in a live-photographical view or a fixed photographical view, where the photograph, the camera parameters (including the pose) of that prerecorded photographical view is prestored on the server and transmitted to the client and 3D-positions of LDPs are overlayed perspectively correctly on the photograph. The photo can be selected automatically according to the users's position and (optionally) orientation. This is usefull for devices, which are not apable to provide a live AR-view themselves.

In an embodiment of the invention, a set of web pages corresponding to a selected search query or web address may be displayed in graphical association with displayed map information or a photographical view taken by the mobile device 2. In this regard, a web page of the set of web pages having a higher hitcount may be displayed differently to a web page having a lower hitcount.

In a further embodiment of the invention, it may be selected at least one result out of the result set received from the search engine 6 and stored in the search- and content-data repository 4. Here, it may be determined whether the selected result is already present in the search- and content-data repository 4, and if the selected result is already present in the search- and content-data repository 4 a count value associated with the selected result may be increased. Preferably, the count value is increased only in case that the selected result is watched by the user for a longer duration above a predetermined duration. This approach is particulary sensefull for low resolution positional information. Further methods of filtering information can be derived from the algorithms described above.

In an embodiment of the invention, the method is applied in a navigation system having route searching function, wherein presenting the search queries or web addresses on or at the mobile device 2 includes displaying the search queries or web addresses in graphical association with a displayed route, particularly at positions on or adjacent the route which are each a predetermined distance ahead of the current position of the mobile device 2. It may also be possible for the user to be guided to the next LDP corresponding to a certain web page or search value, the navigation being provided from the current position to the position of the LDP according to state of the art navigation systems.

According to a further embodiment of the invention, the first and/or second location indicator is determined according to at least one of the following techniques: determining a coordinate of the respective mobile device provided by a satellite of a positioning system, determining a latitude/longitude/altitude (LLA) coordinate of the respective mobile device using map information, determining a location of the respective mobile device provided by a wireless network, determining a location of the respective mobile device provided by a cell phone provider, determining a location of an access point of the respective mobile device when transmitting the search query or web address, determining a location of the respective mobile device by applying image recognition processing of an image taken by the mobile device, manually entering a location indicator into the respective mobile device.

An aspect of the invention may include at least one of entering user account specific information, time of day, and context information together with a search query and location or a web address and location into the search- and content-data repository 4.

According to an embodiment of the invention, multiple servers may be used, each for accessing a respective database holding a search- and content-data repository, wherein each of the databases is adapted for storing a plurality of search queries or web addresses received from a plurality of mobile devices. In the data collection and/or display process, one of the servers may be selected which is associated with an area in which the mobile device 2 is currently located.

Further, search and/or website recommendations may be provided to the mobile device 2, which search and/or website recommendations may be combined with collaborative-filtering-mechanisms, particulary like slope-one.

The invention my also comprise the step of providing a lead-to function to the mobile device 2 which allows the user of the mobile device 2 to be led to at least one location where users of other mobile devices frequently accessed a certain website or entered a certain search query on their respective mobile device to be provided to the search- and content-data repository 4 in the data collection process. This may be used to particularly lead the user to hotspots on "mobile prices" or lead the user to hotspots "DJ" being indicative of an area of a city where a number of music cafes or the like may be located in a cluster. Further, the invention may comprise the step of using a simulation mode in order to view on or at the mobile device 2 location-based information related to any position worldwide by selecting a position, particularly by navigating on a virtual map or navigating through a virtual 3D-world.

The invention may further comprise the step of using an area to apply a clustering algorithm, which area is smaller than the area of an average city.

According to an embodiment of the invention, the process may comprise the step of evaluating specific search query frequencies or data requests at at least one specific location for providing a possibility to provide additional computational resources related to the specific location.

Moreover, an uncertainty value my be associated with the first and/or second location indicator, particularly a higher uncertainty for a mobile phone cell or GPS localisation and a lower uncertainty for a ultra wide band or optical tracking localisation. The uncertainty value may be expressed as an uncertainty distribution, particularly a normal distribution for GPS and a uniform distribution for mobile phone cell localisation.

## Claims

1. A computer-implemented method, comprising: in a data collection process
- receiving at least one first search query from a first mobile device (1),
- receiving a first location indicator indicative of a location of the first mobile device (1),
- transmitting the first search query and the first location indicator to at least one database (4), the database adapted for storing a plurality of search queries received from a plurality of mobile devices, and storing the first search query and assigned location-related information containing or derived from the first location indicator in the database, and in a data display process
- receiving a second location indicator indicative of a location of a second mobile device (2),
- transmitting a request to the database (4) and associating the second location indicator with location-related information stored in the database,
- transmitting at least one second search query (51-53) having assigned location-related information corresponding to the second location indicator from the database (4) to the second mobile device (2) and proactively presenting the at least one second search query on or at the second mobile device without the user of the second mobile device being proactive,
- transmitting the second search query (51-53) to a search engine (6) and presenting at least one result received from the search engine on or at the second mobile device.

2. The method of claim 1, including the step of proactively presenting multiple second search queries (51-53) on or at the second mobile device (2) in a graphical presentation on a display such that each of the second search queries is displayed in a highlighted area on the display separated from any other displayed second search query, which highlighted area is generated automatically upon receipt of the respective search query from the database.

3. The method of claim 1 or 2, wherein the at least one second search query or each of the multiple second search queries are displayed in a respective separated bubble area.

4. A computer-implemented method, comprising: in a data collection process
- receiving at least one first web address from a first mobile device (1),
- receiving a first location indicator indicative of a location of the first mobile device (1),
- transmitting the first web address and the first location indicator to at least one database (4), the database storing a plurality of first web addresses received from a plurality of mobile devices, and storing the first web address and assigned location-related information containing or derived from the first location indicator in the database, and in a data display process,
- receiving a second location indicator indicative of a location of a second mobile device (2),
- transmitting a request to the database (4) and associating the second location indicator with corresponding location-related information stored in the database,
- transmitting at least one second web address of the first web addresses having assigned location-related information corresponding to the second location indicator from the database (4) to the second mobile device (2) and proactively presenting the at least one second web address on or at the second mobile device without the user being proactive,
- transmitting the second web address to a provider (5) and presenting a web page (61-64) corresponding to the web address on or at the second mobile device.

5. The method of one of claims 1 to 4, further comprising
- storing a plurality of search queries (51-53) or a plurality of web addresses, respectively, in the at least one database (4), and
- transmitting at least a first number of the plurality of search queries or web addresses having assigned location-related information corresponding to the second location indicator from the database to the second mobile device (2) and presenting at least a second number of the plurality of search queries or web addresses on or at the second mobile device, which second number is different from the first number.

6. The method of claim 5, wherein the first number of the plurality of search queries or web addresses is determined by filtering a number of search queries or web addresses out of the plurality of search queries or web addresses, respectively.

7. The method of claim 6, wherein filtering a number of search queries or web addresses out of the plurality of search queries or web addresses, respectively, includes evaluating a hit count stored in the database and which is associated with each of the plurality of search queries or web addresses, the hit count indicating a number of previous accesses to the respective search query or web address.

8. The method of one of claims 5 to 7, wherein presenting the second number of the plurality of search queries or web addresses on or at the second mobile device includes displaying the search queries or web addresses in graphical association with displayed map information or a photographical view taken by the second mobile device.

9. The method of one of claims 1 to 8, wherein presenting the at least one second search query or web address on or at the second mobile device includes displaying the search query or web address in speech-bubble-like manner in graphical association with displayed map information or a photographical view taken by the second mobile device, further comprising receiving user's instructions as to selecting the at least one second search query or web address which includes selecting the speech bubble containing the search query or web address to be selected, particularly by clicking into the speech bubble, or by moving the second mobile device to the location point where the speech bubble is displayed, or by pointing onto the speech bubble.

10. The method of one of claims 1 to 9, further comprising selecting at least one result out of the result set received from the search engine, storing the selected result in the database and determining whether the selected result is already present in the database, and if the selected result is already present in the database increasing a count value associated with the selected result wherein the count value is increased only in case that the selected result is watched by the user for a longer duration above a predetermined duration.

11. The method of one of claims 1 to 10, wherein the first and/or second location indicator indicates a location relative to a certain coordinate system, which may particularly be defined by referencing to a certain location or device, such as e.g. earth or airplane.

12. The method of one of claims 1 to 11, further comprising using a simulation mode in order to view on or at the second mobile device location-based information related to any position worldwide by selecting a position, particularly by navigating on a virtual map or navigating through a virtual 3D-world.

13. The method of one of claims 1 to 12, further including the step of selecting, from data collected in the data collection process, data which was recorded in a certain range around the current position of the second mobile device.

14. The method of one of claims 1 to 13, further including the step of applying a clustering algorithm which allows the creation of more than one location data point as a display representation for a specific search query or web address.

15. The method of one of claims 1 to 14 , where a relevance value for at least one search query or web address at a location data point as a display representation for the search query or web address is calculated, particularly from a combination of the following values, each value being optional: the number of times a search query or web address was used in a certain area, a minimum response value, a local penalty, the number of all data collected in a certain area and a global penalty, combined with a weight, whereas the global penalty can be calculated from the percentage of the search-query or web address in the whole database.

16. Computer program product having software code sections which are applicable to perform the method according to one of the preceding claims when loaded into a computer system.

## Patentansprüche

1. Computerimplementiertes Verfahren, umfassend: in einem Datenerfassungsverfahren:
Empfangen von zumindest einer ersten Suchanfrage von einer ersten mobilen Vorrichtung (1),
Empfangen einer ersten Standortanzeige, die einen Standort der ersten mobilen Vorrichtung (1) anzeigt,
Übertragen der ersten Suchanfrage und der ersten Standortanzeige an zumindest eine Datenbank (4), wobei die Datenbank angepasst ist, um eine Vielzahl von Suchanfragen zu speichern, die von einer Vielzahl von mobilen Vorrichtungen empfangen wurde, und Speichern der ersten Suchanfrage und der zugeordneten ortsbezogenen Informationen, die die erste Standortanzeige enthalten oder davon abgeleitet sind, in der Datenbank, und in einem Datenanzeigeverfahren:
Empfangen einer zweiten Standortanzeige, die einen Standort einer zweiten mobilen Vorrichtung (2) anzeigt,
Übertragen einer Anfrage an die Datenbank (4) und Zuordnen der zweiten Standortanzeige mit den in der Datenbank gespeicherten ortsbezogenen Informationen,
Übertragen zumindest einer zweiten Suchanfrage (51-53) mit zugeordneten ortsbezogenen Informationen, die der zweiten Standortanzeige entsprechen, von der Datenbank (4) an die zweite mobile Vorrichtung (2) und proaktives Darstellen der zumindest einen zweiten Suchanfrage auf oder bei der zweiten mobilen Vorrichtung, ohne dass der Benutzer der zweiten mobilen Vorrichtung proaktiv ist,
Übertragen der zweiten Suchanfrage (51-53) an eine Suchmaschine (6) und Darstellen zumindest eines von der Suchmaschine empfangenen Ergebnisses auf oder bei der zweiten mobilen Vorrichtung.

2. Verfahren nach Anspruch 1, einschließlich des Schritts eines proaktiven Darstellens mehrerer zweiter Suchanfragen (51-53) auf oder bei der zweiten mobilen Vorrichtung (2) in einer grafischen Darstellung auf einer Anzeige, so dass jede der zweiten Suchanfragen in einem hervorgehobenen Bereich auf der Anzeige getrennt von jeder anderen angezeigten zweiten Suchanfrage angezeigt wird, wobei dieser hervorgehobene Bereich automatisch beim Empfang der jeweiligen Suchanfrage von der Datenbank erzeugt wird.

3. Verfahren nach Anspruch 1 oder 2, wobei die zumindest eine zweite Suchanfrage oder jede der mehreren zweiten Suchanfragen in einem jeweils getrennten Blasenbereich angezeigt wird.

4. Computerimplementiertes Verfahren, umfassend: in einem Datenerfassungsverfahren
Empfangen zumindest einer ersten Webadresse von einer ersten mobilen Vorrichtung (1),
Empfangen einer ersten Standortanzeige, die einen Standort der ersten mobilen Vorrichtung (1) anzeigt,
Übertragen der ersten Webadresse und der ersten Standortanzeige an zumindest eine Datenbank (4), wobei die Datenbank eine Vielzahl von ersten Webadressen speichert, die von einer Vielzahl von mobilen Vorrichtungen empfangen wurde, und Speichern der ersten Webadresse und der zugeordneten ortsbezogenen Informationen, die die erste Standortanzeige enthalten oder davon abgeleitet sind, in der Datenbank, und in einem Datenanzeigeverfahren:
Empfangen einer zweiten Standortanzeige, die einen Standort einer zweiten mobilen Vorrichtung (2) anzeigt,
Übertragen einer Anfrage an die Datenbank (4) und Zuordnen der zweiten Standortanzeige zu entsprechenden ortsbezogenen Informationen, die in der Datenbank gespeichert sind,
Übertragen von zumindest einer zweiten Webadresse der ersten Webadressen mit zugeordneten ortsbezogenen Informationen, die der zweiten Standortanzeige entsprechen, von der Datenbank (4) an die zweite mobile Vorrichtung (2) und proaktives Darstellen der zumindest einen zweiten Webadresse auf oder bei der zweiten mobilen Vorrichtung, ohne dass der Benutzer proaktiv ist,
Übertragen der zweiten Webadresse an einen Anbieter (5) und Darstellen einer Webseite (61-64), die der Webadresse entspricht, auf oder bei der zweiten mobilen Vorrichtung.

5. Verfahren nach einem der Ansprüche 1 bis 4, ferner umfassend
Speichern einer Vielzahl von Suchanfragen (51-53) bzw. einer Vielzahl von Webadressen in der zumindest einen Datenbank (4) und
Übertragen zumindest einer ersten Anzahl aus der Vielzahl von Suchanfragen oder Webadressen mit zugeordneten ortsbezogenen Informationen, die der zweiten Standortanzeige entsprechen, von der Datenbank an die zweite mobile Vorrichtung (2) und Darstellen zumindest einer zweiten Anzahl der Vielzahl von Suchanfragen oder Webadressen auf oder bei der zweiten mobilen Vorrichtung, wobei sich die zweite Anzahl von der ersten Anzahl unterscheidet.

6. Verfahren nach Anspruch 5, wobei die erste Anzahl der Vielzahl von Suchanfragen oder Webadressen durch Filtern einer Anzahl von Suchanfragen oder Webadressen aus der Vielzahl von Suchanfragen bzw. Webadressen bestimmt wird.

7. Verfahren nach Anspruch 6, wobei das Filtern einer Anzahl von Suchanfragen oder Webadressen aus der Vielzahl von Suchanfragen bzw. Webadressen das Auswerten einer in der Datenbank gespeicherten Trefferzahl beinhaltet, die jeder der Vielzahl von Suchanfragen oder Webadressen zugeordnet ist, wobei die Trefferzahl eine Anzahl von vorherigen Zugriffen auf die jeweilige Suchanfrage oder Webadresse anzeigt.

8. Verfahren nach einem der Ansprüche 5 bis 7, wobei das Darstellen der zweiten Anzahl der Vielzahl von Suchanfragen oder Webadressen auf oder bei der zweiten mobilen Vorrichtung ein Anzeigen der Suchanfragen oder Webadressen in grafischer Zuordnung zu angezeigten Karteninformationen oder einer von der zweiten mobilen Vorrichtung aufgenommenen photographischen Ansicht beinhaltet.

9. Verfahren nach einem der Ansprüche 1 bis 8, wobei das Darstellen der zumindest einen zweiten Suchanfrage oder Webadresse auf oder bei der zweiten mobilen Vorrichtung ein Anzeigen der Suchanfrage oder Webadresse in sprachblasenartiger Weise in grafischer Zuordnung zu angezeigten Karteninformationen oder einer von der zweiten mobilen Vorrichtung aufgenommenen photographischen Ansicht beinhaltet, ferner umfassend Empfangen von Anweisungen des Benutzers zum Auswählen der zumindest einen zweiten Suchanfrage oder Webadresse, die ein Auswählen der Sprechblase mit der zu wählenden Suchanfrage oder Webadresse beinhaltet, insbesondere durch Klicken in die Sprechblase, oder durch Bewegen der zweiten mobilen Vorrichtung an den Ort, an dem die Sprechblase angezeigt wird, oder durch Zeigen auf die Sprechblase.

10. Verfahren nach einem der Ansprüche 1 bis 9, ferner umfassend ein Auswählen zumindest eines Ergebnisses aus der von der Suchmaschine empfangenen Ergebnismenge, ein Speichern des ausgewählten Ergebnisses in der Datenbank und ein Bestimmen, ob das ausgewählte Ergebnis bereits in der Datenbank vorhanden ist, und wenn das ausgewählte Ergebnis bereits in der Datenbank vorhanden ist, Erhöhen eines Zählwerts, der dem ausgewählten Ergebnis zugeordnet ist, wobei der Zählwert nur dann erhöht wird, wenn das ausgewählte Ergebnis vom Benutzer für eine längere Dauer über eine vorbestimmte Dauer hinweg beobachtet wird.

11. Verfahren nach einem der Ansprüche 1 bis 10, wobei die erste und/oder zweite Standortanzeige einen Standort relativ zu einem bestimmten Koordinatensystem anzeigt, was insbesondere durch Bezugnahme auf eine bestimmte Position oder Vorrichtung, wie z.B. die Erde oder ein Flugzeug, definiert sein kann.

12. Verfahren nach einem der Ansprüche 1 bis 11, ferner umfassend ein Verwenden eines Simulationsmodus, um auf oder bei der zweiten mobilen Vorrichtung ortsbezogene Informationen anzusehen, die sich auf eine beliebige Position weltweit beziehen, durch Auswählen eine Position, insbesondere durch Navigieren auf einer virtuellen Karte oder Navigieren durch eine virtuelle 3D-Welt.

13. Verfahren nach einem der Ansprüche 1 bis 12, ferner umfassend den Schritt eines Auswählens von Daten, die in einem bestimmten Bereich um die aktuelle Position der zweiten mobilen Vorrichtung herum aufgezeichnet wurden, aus den im Datenerfassungsverfahren gesammelten Daten.

14. Verfahren nach einem der Ansprüche 1 bis 13, ferner umfassend den Schritt eines Anwendens eines Clustering-Algorithmus, der die Erzeugung von mehr als einem Standortdatenpunkt als Anzeigedarstellung für eine bestimmte Suchanfrage oder Webadresse ermöglicht.

15. Verfahren nach einem der Ansprüche 1 bis 14, bei dem ein Relevanzwert für zumindest eine Suchanfrage oder Webadresse an einem Standortdatenpunkt als Anzeigedarstellung für die Suchanfrage oder Webadresse berechnet wird, insbesondere aus einer Kombination der folgenden Werte, wobei jeder Wert optional ist: die Anzahl der Nutzungen einer Suchanfrage oder Webadresse in einem bestimmten Bereich, ein minimaler Antwortwert, eine lokale Strafe, die Anzahl aller in einem bestimmten Bereich gesammelten Daten und eine globale Strafe, kombiniert mit einem Gewicht, während die globale Strafe aus dem Prozentsatz der Suchanfrage oder Webadresse in der gesamten Datenbank berechnet werden kann.

16. Computerprogrammprodukt mit Softwarecodeteilen, die anwendbar sind, um das Verfahren nach einem der vorhergehenden Ansprüche auszuführen, wenn sie in ein Computersystem geladen werden.

## Revendications

1. Un procédé mis en oeuvre par calculateur, comprenant : dans un processus de recueil de données,
- la réception d'au moins une première requête de recherche provenant d'un premier dispositif mobile (1),
- la réception d'un premier indicateur d'emplacement représentatif d'un emplacement du premier dispositif mobile (1),
- la transmission de la première requête de recherche et du premier indicateur d'emplacement à au moins une base de données (4), la base de données étant apte à stocker une pluralité de requêtes de recherche reçues d'une pluralité de dispositifs mobiles, et le stockage de la première requête de recherche et de l'information liée à l'emplacement attribuée contenant le premier indicateur de localisation, ou dérivé de celui-ci, dans la base de données, et, dans un processus d'affichage de données,
- la réception d'un second indicateur de localisation représentatif d'un emplacement d'un second dispositif mobile (2),
- la transmission d'une demande à la base de données (4) et l'association du second indicateur de localisation à une information liée à l'emplacement stockée dans la base de données,
- la transmission d'au moins une seconde requête de recherche (51-53) possédant une information liée à l'emplacement attribuée correspondant au second indicateur de localisation de la base de données (4) au second dispositif mobile (2) et la présentation de manière anticipatrice de la au moins une seconde requête de recherche sur le second dispositif mobile, ou au niveau de celui-ci, sans que l'utilisateur du second dispositif mobile ne soit anticipateur,
- la transmission de la seconde requête de recherche (51-53) à un moteur de recherche (6) et la présentation d'au moins un résultat reçu du moteur de recherche sur le second dispositif mobile au niveau de celui-ci.

2. Le procédé de la revendication 1, comprenant l'étape de présentation de manière anticipatrice de secondes requêtes de recherche multiples (51-53) sur le second dispositif mobile (2), ou au niveau de celui-ci, en une présentation graphique sur un afficheur de telle sorte que chacune des secondes requêtes de recherche soit affichée dans une zone accentuée sur l'afficheur distincte de toute autre seconde requête de recherche affichée, zone accentuée qui est générée automatiquement sur réception de la requête de recherche respective en provenance de la base de données.

3. Le procédé de la revendication 1 ou 2, dans lequel la au moins une seconde requête de recherche ou chacune des secondes requêtes de recherche multiples est affichée dans une zone d'info-bulle séparée respective.

4. Un procédé mis en oeuvre par calculateur, comprenant : dans un processus de recueil de données,
- la réception d'au moins une première adresse web en provenance d'un premier dispositif mobile (1),
- la réception d'un premier indicateur d'emplacement représentatif d'un emplacement du premier dispositif mobile (1),
- la transmission de la première adresse web et du premier indicateur de localisation à au moins une base de données (4), la base de données stockant une pluralité de premières adresses web reçues d'une pluralité de dispositifs mobiles, et le stockage de la première adresse web et d'une information liée à l'emplacement attribuée contenant le premier indicateur de localisation, ou dérivé de celui-ci, dans la base de données, et, dans un processus d'affichage de données,
- la réception d'un second indicateur de localisation représentatif d'une localisation d'un second dispositif mobile (2),
- la transmission d'une demande à la base de données (4) et l'association du second indicateur de localisation à une information liée à l'emplacement correspondante stockée dans la base de données,
- la transmission d'au moins une seconde adresse web des premières adresses web possédant une information liée à l'emplacement attribuée correspondant au second indicateur de localisation de la base de données (4) au second dispositif mobile (2) et la présentation de manière anticipatrice de la au moins une seconde adresse web sur le second dispositif mobile, ou au niveau de celui-ci, sans que l'utilisateur ne soit anticipateur,
- la transmission de la seconde adresse web à un fournisseur (5) et la présentation d'une page web (61-64) correspondant à l'adresse web sur le second dispositif mobile, ou au niveau de celui-ci.

5. Le procédé de l'une des revendications 1 à 4, comprenant en outre
- le stockage d'une pluralité de requêtes de recherche (51-53) ou d'une pluralité d'adresses web, respectivement, dans la au moins une base de données (4), et
- la transmission d'au moins un premier nombre de la pluralité de requêtes de recherche ou d'adresse web possédant une information liée à l'emplacement attribuée correspondant au second indicateur d'emplacement de la base de données au second dispositif mobile (2) et la présentation d'au moins un second nombre de la pluralité de requêtes de recherche ou d'adresse web sur le second dispositif mobile, ou au niveau de celui-ci, second nombre qui est différent du premier nombre.

6. Le procédé de la revendication 5, dans lequel le premier nombre de la pluralité de requêtes de recherche ou d'adresse web est déterminé par filtrage d'un nombre de requêtes de recherche ou d'adresses web parmi la pluralité de requêtes de recherche ou d'adresse web, respectivement.

7. Le procédé de la revendication 6, dans lequel le filtrage d'un nombre de requêtes de recherche ou d'adresse web parmi la pluralité de requêtes de recherche ou d'adresse web, respectivement, comprend l'évaluation d'un compte de réussites stockées dans la base de données qui est associé à chacune d'entre la pluralité de requêtes de recherche ou d'adresse web, le compte de réussites indiquant un nombre d'accès antérieurs à la requête de recherche ou à l'adresse web respective.

8. Le procédé de l'une des revendications 5 à 7, dans lequel la présentation du second nombre de la pluralité de requêtes de recherche ou d'adresse web sur le second dispositif mobile, ou au niveau de celui-ci, inclut l'affichage des requêtes de recherche ou des adresses web en association graphique avec une information cartographique affichée ou une vue photographique prise par le second dispositif mobile.

9. Le procédé de l'une des revendications 1 à 8, dans lequel la présentation de la au moins une seconde requête de recherche ou adresse web sur le dispositif mobile, ou au niveau de celui-ci, inclut l'affichage de la requête de recherche ou adresse web d'une manière semblable à un phylactère en association graphique avec une information cartographique affichée ou une vue photographique prise par le second dispositif mobile, comprenant en outre la réception d'instructions de l'utilisateur sur la manière de sélectionner la au moins une seconde requête de recherche ou adresse web qui inclut la sélection du phylactère contenant la requête de recherche ou d'adresse web à sélectionner, en particulier en cliquant dans le phylactère, ou en déplaçant le second dispositif mobile jusqu'au point de l'emplacement où est affiché le phylactère, ou par pointage sur le phylactère.

10. Le procédé de l'une des revendications 1 à 9, comprenant en outre la sélection d'au moins un résultat parmi l'ensemble de résultats reçus du moteur de recherche, le stockage du résultat sélectionné dans la base de données et la détermination si le résultat sélectionné est ou non déjà présent dans la base de données, et si le résultat sélectionné est déjà présent dans la base de données l'incrémentation d'une valeur de compte associée au résultat sélectionné, la valeur de compte n'étant incrémentée que dans le cas où le résultat sélectionné est observé par l'utilisateur pendant une durée plus longue qu'une durée prédéterminée.

11. Le procédé de l'une des revendications 1 à 10, dans lequel le premier et/ou le second indicateur de localisation indiquent une localisation par rapport à un certain système de coordonnées, qui peut en particulier être défini par référence à un certain emplacement ou dispositif, tel que par exemple la terre ou un aéronef.

12. Le procédé de l'une des revendications 1 à 11, comprenant en outre l'utilisation d'un mode de simulation afin de visualiser sur le dispositif mobile, ou au niveau de celui-ci, une information basée sur la localisation relative à une quelconque position dans le monde par sélection d'une position, en particulier par navigation sur une carte virtuelle ou navigation dans un monde 3D virtuel.

13. Le procédé de l'une des revendications 1 à 12, comprenant en outre l'étape de sélection, à partir des données recueillies par le processus de recueil de données, de données qui avaient été enregistrées dans un certain rayon autour de la position courante du second dispositif mobile.

14. Le procédé de l'une des revendications 1 à 13, comprenant en outre l'étape d'application d'un algorithme de mise en grappe qui permet la création de plus qu'un point de donnée d'emplacement en tant que représentation d'affichage pour une requête de recherche ou une adresse web spécifiques.

15. Le procédé de l'une des revendications 1 à 14, dans lequel une valeur de pertinence pour au moins une requête de recherche ou adresse web en un point de donnée d'emplacement en tant que représentation d'affichage pour la requête de recherche ou adresse web est calculée, en particulier à partir d'une combinaison des valeurs suivantes, chaque valeur étant optionnelle : le nombre de fois où une requête de recherche ou d'adresse web a été utilisée dans une certaine zone, une valeur de réponse minimale, une pénalité locale, le nombre de toutes les données recueillies dans une certaine zone et une pénalité globale, combiné à une pondération, la pénalité globale pouvant être calculée à partir du pourcentage de la requête de recherche ou de l'adresse web dans la totalité de la base de données.

16. Produit de programme informatique possédant des sections de code logiciel qui sont applicables pour mettre en oeuvre le procédé selon l'une des revendications précédentes lorsqu'elles sont chargées dans un système informatique.
